# EUROPEAN PATENT APPLICATION

(11) **EP 3 089 421 A1**
(43) Date of publication of application: **02.11.2016**
(21) Application number: 13900723.1
(22) Date of filing: 31.12.2013
(51) Int. Cl.: H04L 29/06, G06F 12/00

(54) **NETWORK ELEMENT DATA ACCESS METHOD AND APPARATUS, AND NETWORK MANAGEMENT SYSTEM**

(71) Applicant: Huawei Technologies Co., Ltd., Longgang District Shenzhen, Guangdong 518129 (CN)
(72) Inventor: WEI, Xuefeng, Shenzhen Guangdong 518129 (CN); LV, Tao, Shenzhen Guangdong 518129 (CN); WANG, Xinli, Shenzhen Guangdong 518129 (CN); JIA, Chunxiu, Shenzhen Guangdong 518129 (CN)
(74) Representative: Thun, Clemens
(86) International application number: PCT/CN2013/091146
(87) International publication number: WO 2015/100628

(57) **Abstract**

Embodiments of the present invention provide a network element data access processing method and apparatus, and a network management system. In the network management system, a virtual network element is disposed between a network management server and at least one network element device; the virtual network element stores backup data of service data in one or more network element devices; the network management server implements access of service data in a network element device by accessing backup data that is of the service data in the network element device and stored in the virtual network element, so as to implement that the network management server accesses the service data in the network element device without relying on an interface of the network element device any longer, thereby improving access efficiency of accessing the service data by the network management server.

## Description

### TECHNICAL FIELD

Embodiments of the present invention relate to the field of computer network technologies, and in particular, to a network element data access processing method and apparatus, and a network management system.

### BACKGROUND

In an existing network management system, to enable a user to perform configuration, management, and maintenance on a network element device by using the network management system, a network management system server needs to frequently acquire network element data of the network element device, and display the network element data by using the network management system.

In the prior art, an application interface is independently configured on each network element device in the network management system, and the network management system (Network management system, NMS) server accesses network element data stored in the network element device by directly using the foregoing application interface. However, this manner relies heavily on an interface of the network element device, and currently, many network element devices are unable to provide such an interface or such an interface has a low throughput and efficiency. Therefore, efficiency of accessing the network element data may be affected.

### SUMMARY

Embodiments of the present invention provide a network element data access processing method and apparatus, and a network management system, so as to improve efficiency of accessing data in a network element device.

According to a first aspect, an embodiment of the present invention provides a network management system, including: a network management server, a virtual network element, and a network element device, where
the network element device is configured to store service data;
the network management server is configured to send a data access request for the service data stored in the network element device to the virtual network element; and
the virtual network element is configured to store backup data of the service data in at least one network element device, and perform a corresponding data access operation on the stored backup data of the service data according to the data access request sent by the network management server.

With reference to the first aspect, in a first feasible implementation manner, the network management server is further configured to: store a correspondence between the virtual network element and the network element device, and store identification information of one or more virtual network elements that are in the network management system; and
in terms of the sending a data access request for the service data stored in the network element device to the virtual network element, the network management server is specifically configured to: determine, according to the correspondence between the virtual network element and the network element device, a virtual network element to which the data access request points; and send the data access request to the virtual network element according to the identification information of the virtual network element.

With reference to the first aspect or the first feasible implementation manner, in a second feasible implementation manner of the first aspect, the data access request is a data read request;
in terms of the performing a corresponding data access operation on the stored backup data of the service data according to the data access request sent by the network management server, the virtual network element is specifically configured to: read, according to a data read request sent by the network management server, data requested by the data read request from the stored backup data; and send the read data to the network management server; and
the network management server is further configured to receive the data that is returned by the virtual network element and corresponding to the data read request.

With reference to the first aspect or the first feasible implementation manner, in a third feasible implementation manner of the first aspect, the data access request is a data read request;
in terms of the performing a corresponding data access operation on the stored backup data of the service data according to the data access request sent by the network management server, the virtual network element is specifically configured to: read, according to a data read request sent by the network management server, data requested by the data read request from the stored backup data; convert the read data from a network element data type into an application data type; and send the data converted into the application data type to the network management server; and
the network management server is further configured to receive the data that is returned by the virtual network element, corresponding to the data read request, and converted into the application data type.

With reference to the first aspect or the first feasible implementation manner, in a fourth feasible implementation manner of the first aspect, the data access request is a data storage request;
in terms of the performing a corresponding data access operation on the stored backup data of the service data according to the data access request sent by the network management server, the virtual network element is specifically configured to: store, according to a data storage request sent by the network management server, to-be-stored data requested by the data storage request into the backup data of the virtual network element; and send the to-be-stored data to a network element device to which the data storage request points; and
the network element device is configured to store the to-be-stored data requested by the data storage request.

With reference to the first aspect or the first feasible implementation manner, in a fifth feasible implementation manner of the first aspect, the data access request is a data storage request;
in terms of the performing a corresponding data access operation on the stored backup data of the service data according to the data access request sent by the network management server, the virtual network element is specifically configured to: store, according to a data storage request sent by the network management server, to-be-stored data requested by the data storage request into the virtual network element; convert the to-be-stored data from an application data type into a network element data type; and send the to-be-stored data converted into the network element data type to a network element device to which the data storage request points; and
the network element device is configured to store the to-be-stored data converted into the application data type.

With reference to the first aspect or the first feasible implementation manner, in a fifth feasible implementation manner of the first aspect, the data access request is a data modification request;
in terms of the performing a corresponding data access operation on the stored backup data of the service data according to the data access request sent by the network management server, the virtual network element is specifically configured to: use, according to a data modification request sent by the network management server, new data requested by the data modification request to replace original data that is in the backup data and to which the data modification request points; and send the new data requested by the data modification request to a network element device that stores the original data; and
the network element device is configured to store the original data to which the data modification request points, and use the new data sent by the virtual network element to replace the stored original data.

With reference to the first aspect or the first feasible implementation manner, in a sixth feasible implementation manner of the first aspect, the data access request is a data modification request;
in terms of the performing a corresponding data access operation on the stored backup data of the service data according to the data access request sent by the network management server, the virtual network element is further configured to: use, according to a data modification request sent by the network management server, new data requested by the data modification request to replace original data that is in the backup data and to which the data modification request points; convert the new data from an application data type into a network element data type; and send the new data converted into the network element data type to a network element device that stores the original data; and
the network element device is configured to store the original data to which the data modification request points, and use the new data that is sent by the virtual network element and converted into the network element data type to replace the stored original data.

With reference to the first aspect or the first feasible implementation manner, in a seventh feasible implementation manner of the first aspect, the data access request is a deletion/modification request;
in terms of the performing a corresponding data access operation on the stored backup data of the service data according to the data access request sent by the network management server, the virtual network element is specifically configured to: delete, according to a deletion/modification request sent by the network management server, data that is in the backup data and requested by the deletion/modification request; and send an instruction message to a network element device that stores the data requested by the deletion/modification request, so as to instruct to delete the data requested by the deletion/modification request; and
the network element device is configured to delete, according to the instruction message, the data requested by the deletion/modification request from the stored service data.

With reference to the first aspect or any of the first feasible implementation manner to the seventh implementation manner, in an eighth feasible implementation manner of the first aspect, an interface between the network management server and the virtual network element uses a proprietary protocol; an interface between the virtual network element and the network element device uses the File Transfer Protocol, the Simple Network Management Protocol, or the Telecommunication Network Protocol.

According to a second aspect, an embodiment of the present invention further provides a network data access method, including:
receiving, by a virtual network element, a data access request that is sent by a network management server for service data stored in a network element device, where the virtual network element stores backup data of service data stored in at least one network element device; and
performing, by the virtual network element, a corresponding data access operation on the stored backup data of the service data according to the data access request sent by the network management server.

With reference to the second aspect, in a first implementation manner of the second aspect, the data access request is a data read request; and
the performing, by the virtual network element, a corresponding data access operation on the stored backup data according to the data access request is specifically:
reading, by the virtual network element according to a data read request sent by the network management server, data requested by the data read request from the stored backup data; and sending the read data to the network management server.

With reference to the second aspect, in a second implementation manner of the second aspect, the data access request is a data read request; and
the performing, by the virtual network element, a corresponding data access operation on the stored backup data according to the data access request is specifically:
reading, by the virtual network element according to a data read request sent by the network management server, data requested by the data read request from the stored backup data; converting the read data from a network element data type into an application data type; and sending the data converted into the application data type to the network management server.

With reference to the second aspect, in a third implementation manner of the second aspect, the data access request is a data storage request; and
the performing, by the virtual network element, a corresponding data access operation on the stored backup data according to the data access request is specifically:
storing, by the virtual network element according to a data storage request sent by the network management server, to-be-stored data requested by the data storage request into the backup data of the virtual network element; and sending the to-be-stored data to a network element device to which the data storage request points.

With reference to the second aspect, in a fourth implementation manner of the second aspect, the data access request is a data storage request; and
the performing, by the virtual network element, a corresponding data access operation on the stored backup data according to the data access request is specifically:
storing, by the virtual network element according to a data storage request sent by the network management server, to-be-stored data requested by the data storage request into the virtual network element; converting the to-be-stored data from an application data type into a network element data type; and sending the to-be-stored data converted into the network element data type to a network element device to which the data storage request points.

With reference to the second aspect, in a fifth implementation manner of the second aspect, the data access request is a data modification request; and
the performing, by the virtual network element, a corresponding data access operation on the stored backup data according to the data access request is specifically:
using, by the virtual network element according to a data modification request sent by the network management server, new data requested by the data modification request to replace original data that is in the backup data and to which the data modification request points; and sending the new data requested by the data modification request to a network element device that stores the original data.

With reference to the second aspect, in a sixth implementation manner of the second aspect, the data access request is a data modification request; and
the performing, by the virtual network element, a corresponding data access operation on the stored backup data according to the data access request is specifically:
using, by the virtual network element according to a data modification request sent by the network management server, new data requested by the data modification request to replace original data that is in the backup data and to which the data modification request points; converting the new data from an application data type into a network element data type; and sending the new data converted into the network element data type to a network element device that stores the original data.

With reference to the second aspect, in a seventh implementation manner of the second aspect, the data access request is a deletion/modification request; and
the performing, by the virtual network element, a corresponding data access operation on the stored backup data according to the data access request is specifically:
deleting, by the virtual network element according to a deletion/modification request sent by the network management server, data that is in the backup data and requested by the deletion/modification request; and sending an instruction message to a network element device that stores the data requested by the deletion/modification request, so as to instruct to delete the data requested by the deletion/modification request.

According to a third aspect, an embodiment of the present invention further provides a network element data access method, including:
generating, by a network management server, a data access request for service data stored in a network element device; and
sending, by the network management server, the data access request for the network element device to a virtual network element, where the virtual network element stores backup data of the service data in at least one network element device, so that the virtual network element performs a corresponding data access operation on the stored backup data of the service data according to the data access request.

With reference to the third aspect, in a first feasible implementation manner of the third aspect, the network management server stores a correspondence between the virtual network element and the network element device, and stores identification information of one or more virtual network elements that are in the network management system; and
the sending, by the network management server, the data access request for the network element device to a virtual network element specifically includes:
determining, by the network management server according to the correspondence between the virtual network element and the network element device, a virtual network element to which the data access request points; and
sending, by the network management server, the data access request to the virtual network element according to identification information of the virtual network element.

With reference to the third aspect or the first feasible implementation manner, in a second feasible implementation manner of the third aspect, the data access request is a data read request; and
after the sending, by the network management server, the data access request for the network element device to a virtual network element, the method further includes:
receiving, by the network management server, data that is returned by the virtual network element and corresponding to the data read request; or
receiving, by the network management server, data that is returned by the virtual network element, corresponding to the data read request, and converted into an application data type.

With reference to the third aspect or the first feasible implementation manner, in a third feasible implementation manner of the third aspect, the data access request is a data storage request, or the data access request is data modification request, or the data access request is a deletion/modification request.

According to a fourth aspect, an embodiment of the present invention further provides a virtual network element, including:
a transceiver module, configured to receive a data access request that is sent by a network management server for service data stored in a network element device;
a storing module, configured to store backup data of service data stored in at least one network element device; and
a processing module, configured to perform, according to the data access request sent by the network management server, a corresponding data access operation on the backup data that is of the service data and stored in the storing module.

With reference to the fourth aspect, in a first implementation manner of the fourth aspect, the data access request is a data read request;
in terms of the performing a corresponding data access operation on the stored backup data of the service data according to the data access request sent by the network management server, the processing module is specifically configured to read, according to a data read request sent by the network management server, data requested by the data read request from the stored backup data; and
the transceiver module is further configured to send the read data to the network management server.

With reference to the fourth aspect, in a second implementation manner of the fourth aspect, the data access request is a data read request;
in terms of the performing a corresponding data access operation on the stored backup data of the service data according to the data access request sent by the network management server, the processing module is specifically configured to: read, according to a data read request sent by the network management server, data requested by the data read request from the backup data stored in the storing module; and convert the read data from a network element data type into an application data type; and
the transceiver module is further configured to send the data converted into the application data type to the network management server.

With reference to the fourth aspect, in a third implementation manner of the fourth aspect, the data access request is a data storage request;
in terms of the performing a corresponding data access operation on the stored backup data of the service data according to the data access request sent by the network management server, the processing module is specifically configured to store, according to a data storage request sent by the network management server, to-be-stored data requested by the data storage request into the storing module; and
the transceiver module is further configured to send the to-be-stored data to a network element device to which the data storage request points.

With reference to the fourth aspect, in a fourth implementation manner of the fourth aspect, the data access request is a data storage request;
in terms of the performing a corresponding data access operation on the stored backup data of the service data according to the data access request sent by the network management server, the processing module is specifically configured to: store, according to a data storage request sent by the network management server, to-be-stored data requested by the data storage request into the storing module; and convert the to-be-stored data from an application data type into a network element data type; and
the transceiver module is further configured to send the to-be-stored data converted into the network element data type to a network element device to which the data storage request points.

With reference to the fourth aspect, in a fifth implementation manner of the fourth aspect, the data access request is a data modification request;
in terms of the performing a corresponding data access operation on the stored backup data of the service data according to the data access request sent by the network management server, the processing module is specifically configured to use, according to a data modification request sent by the network management server, new data requested by the data modification request to replace original data that is in the backup data and to which the data modification request points; and
the transceiver module is further configured to send the new data requested by the data modification request to a network element device that stores the original data.

With reference to the fourth aspect, in a sixth implementation manner of the fourth aspect, the data access request is a data modification request;
in terms of the performing a corresponding data access operation on the stored backup data of the service data according to the data access request sent by the network management server, the processing module is specifically configured to: use, according to a data modification request sent by the network management server, new data requested by the data modification request to replace original data that is in the backup data and to which the data modification request points; and convert the new data from an application data type into a network element data type; and
the transceiver module is further configured to send the new data converted into the network element data type to a network element device that stores the original data.

With reference to the fourth aspect, in a seventh implementation manner of the fourth aspect, the data access request is a deletion/modification request; and
in terms of the performing a corresponding data access operation on the stored backup data of the service data according to the data access request sent by the network management server, the processing module is specifically configured to: delete, according to a deletion/modification request sent by the network management server, data that is in the backup data and requested by the deletion/modification request; and send an instruction message to a network element device that stores the data requested by the deletion/modification request, so as to instruct to delete the data requested by the deletion/modification request.

According to a fifth aspect, an embodiment of the present invention further provides a network management server, including:
a generating module, configured to generate a data access request for service data stored in a network element device; and
a transceiver module, configured to send the data access request for the network element device to a virtual network element, where the virtual network element stores backup data of the service data in at least one network element device, so that the virtual network element performs a corresponding data access operation on the stored backup data of the service data according to the data access request.

With reference to the fifth aspect, in a first feasible implementation manner of the fifth aspect, the network management server further includes:
a storing module, configured to store a correspondence between the virtual network element and the network element device, and store identification information of one or more virtual network elements that are in the network management system; and
in terms of the sending the data access request for the network element device to a virtual network element, the transceiver module is specifically configured to: determine, according to the correspondence between the virtual network element and the network element device stored in the storing module, a virtual network element to which the data access request points; and send the data access request to the virtual network element according to identification information that is of the virtual network element and stored in the storing module.

With reference to the fifth aspect or the first feasible implementation manner, in a second feasible implementation manner of the fifth aspect, the data access request is a data read request; and
after sending the data access request for the network element device to the virtual network element, the transceiver module is further configured to receive the data that is returned by the virtual network element and corresponding to the data read request, or receive the data that is returned by the virtual network element, corresponding to the data read request, and converted into an application data type.

With reference to the fifth aspect or the first feasible implementation manner, in a third feasible implementation manner of the fifth aspect, the data access request is a data storage request, or the data access request is data modification request, or the data access request is a deletion/modification request.

Embodiments of the present invention provide a network element data access processing method and apparatus, and a network management system. In the network management system, a virtual network element is disposed between a network management server and at least one network element device; the virtual network element stores backup data of service data in one or more network element devices; the network management server implements access of service data in a network element device by accessing backup data that is of the service data in the network element device and stored in the virtual network element, so as to implement that the network management server accesses the service data in the network element device without relying on an interface of the network element device any longer, thereby improving access efficiency of accessing the service data by the network management server.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and persons of ordinary skill in the art may still derive other drawings from these accompanying drawings without creative efforts.
FIG. 1 is a schematic structural diagram of an embodiment of a network management system according to the present invention;
FIG. 2 is a schematic architecture diagram of a network management system according to the present invention;
FIG. 3 is another schematic architecture diagram of a network management system according to the present invention;
FIG. 4 is a schematic flowchart of an embodiment of a network element data access method according to an embodiment of the present invention;
FIG. 5 is a schematic flowchart of an embodiment of a network element data access method according to an embodiment of the present invention;
FIG. 6 is a schematic structural diagram of an embodiment of a virtual network element according to the present invention;
FIG. 7 is a schematic structural diagram of an embodiment of a processing module in a virtual network element according to the present invention;
FIG. 8 is a schematic structural diagram of another embodiment of a processing module in a virtual network element according to the present invention;
FIG. 9 is a schematic structural diagram of another embodiment of a processing module in a virtual network element according to the present invention;
FIG. 10 is a schematic structural diagram of still another embodiment of a processing module in a virtual network element according to the present invention;
FIG. 11 is a schematic structural diagram of an embodiment of a virtual network element according to the present invention;
FIG. 12 is a schematic structural diagram of an embodiment of a network management server according to the present invention;
FIG. 13 is a schematic structural diagram of another embodiment of a network management server according to the present invention;
FIG. 14 is a schematic structural diagram of still another embodiment of a network management server according to the present invention; and
FIG. 15 is a schematic structural diagram of another embodiment of a network management server according to the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

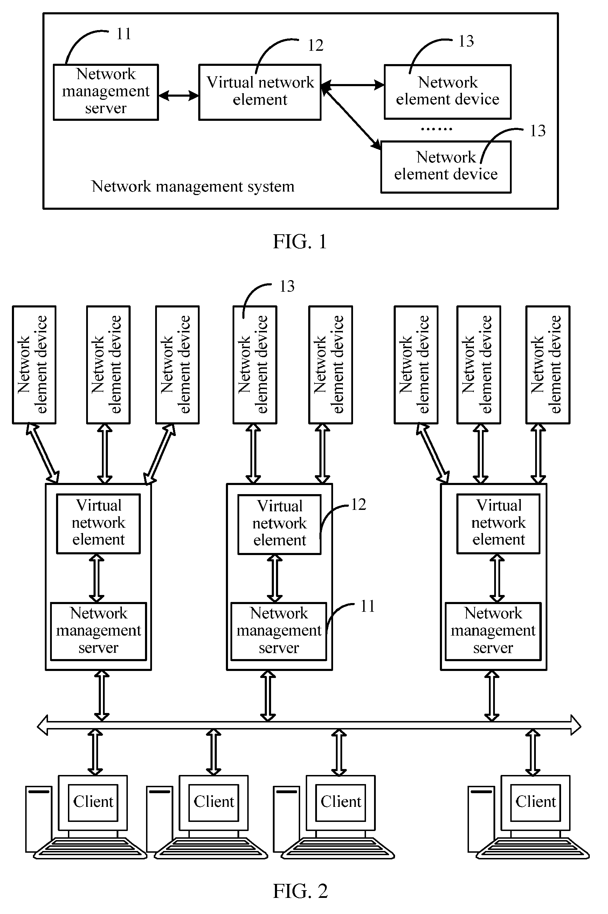

FIG. 1 is a schematic structural diagram of an embodiment of a network management system according to the present invention. As shown in FIG. 1, the system includes: a network management server 11, a virtual network element 12, and a network element device 13, where
the network element device 13 is configured to store service data;
the network management server 11 is configured to send a data access request for the service data stored in the network element device 13 to the virtual network element 12; and
the virtual network element 12 is configured to store backup data of service data in at least one network element device 13, and perform a corresponding data access operation on the stored backup data of the service data according to the data access request sent by the network management server 11.

According to the technical solution provided in this embodiment of the present invention, the virtual network element 12 needs to be disposed in the network management system, where the system may include one or more network management servers 11, and may also include one or more virtual network elements 12. In a scenario, one virtual network element 12 and one network management server 11 may be disposed in an integration manner; for example, the two may be disposed on one server (server). In this implementation scenario, functions of the two may both be implemented on the server by using software, and operations of the two are performed by a central processing unit on the server. In this implementation scenario, an operation performed by the network management server 11 and an operation performed by the virtual network element 12 are respectively performed by different processes; therefore, the data access request sent by the network management server 11 to the virtual network element 12 is equivalent to an inter-process access request. In another scenario, the network management server 11 and the virtual network element 12 may be independently disposed separately; that is, the two may be an independent physical entity separately. The network element device 13 only needs to provide a base data service interface. For example, by using the base data service interface, the network management server 11 may directly modify a configuration parameter of the network element device 13, or monitor a status of the network element device 13 in real time. However, the network management server 11 may complete access of the service data in the network element device 13 by accessing the backup data stored in the virtual network element 12, thereby preventing the network element device 13 from relying on an interface of the network element device, and minimizing hardware costs and development costs of the network element device.

The virtual network element 12 may store backup data of service data of one or more network element devices 13. Specifically, data storage of the virtual network element may use fragmentation; that is, the backup data may be stored on a per-network element device 13 basis, and each network element device 13 is corresponding to one piece of backup data. However, a storage model of the backup data may be consistent with that of the network element device 13; that is, a data type of the backup data may be consistent with a service data type of the network element device 13. In addition, a data volume of each piece of backup data may be relatively constant. When the network management server 11 needs to access data in the network element device 13, the network management server 11 may directly access the backup data in the virtual network element 12. That is, the network management server 11 may send a data access request to the virtual network element 12, and does not need to further access the network element device, which can effectively avoid impact on performance of the network element device caused because the network element device directly provides a data service, thereby avoiding relying on the interface of the network element device, and improving efficiency of accessing network element data. It should be noted that, there may be multiple types of correspondences between the network management server 11 and the virtual network element 12. For example, one network management server 11 may access one or more virtual network elements 12, or multiple network management servers 11 may access one virtual network element 12. Specifically, quantities of network management servers 11 and virtual network elements 12 and a quantity of network element devices 13 whose backup data is stored in each virtual network element 12 may be set according to an actual service access requirement.

Optionally, in an implementation scenario in which the system includes multiple virtual network elements 12, the network management server 11 may store information about a correspondence between a virtual network element and a network element device, where the correspondence may be stored in the network management server 11 in a form of a mapping table. In addition, the network management server 11 may further store identification information of the virtual network elements in the network management system, where the identification information may be IP addresses of the virtual network elements 12 in the system. When sending a data access request, the network management server 11 may determine, according to the correspondence between a virtual network element and a network element device, a virtual network element to which the data access request points, and further send the data access request to the virtual network element according to identification information of the virtual network element.

The virtual network element 12 may periodically update stored backup data, so as to implement consistency between the stored backup data and data stored in the network element device. Alternatively, in an initialization phase, the virtual network element 12 may also copy data in the network element device 13 into a local storage unit of the virtual network element 12 by sending a data update request to the network element device 13.

The virtual network element 12 and the network element device 13 may be connected by using an existing interface, for example, using a File Transfer Protocol interface, a Simple Network Management Protocol interface, or a Telecommunication Network Protocol interface. The network management server 11 accesses the virtual network element 12 rather than directly accesses the network element device 13, and the virtual network element 12 distances the network management server 11 from the network element device 13. The virtual network element 12 provides an access interface that is more flexible and more efficient and that has high scalability. The network management server 11 and the virtual network element 12 may be connected by using a more flexible proprietary protocol interface, where such a proprietary interface is more flexible, has higher scalability, and can satisfy different application requirements. The foregoing proprietary protocol interface may be specifically an interface predetermined in advance, for example, a function interface or an internal message interface.

Specifically, the data access request mentioned above may include a data read request, a data storage request, a data modification request, a data deletion request, or the like.

In a scenario, the data access request is a data read request. The virtual network element 12 is specifically configured to: read, according to a data read request sent by the network management server 11, data requested by the data read request from the stored backup data; and send the read data to the network management server. The network management server 11 is further configured to receive the data that is returned by the virtual network element and corresponding to the data read request.

Optionally, the virtual network element 12 is specifically configured to: read, according to a data read request sent by the network management server 11, data requested by the data read request from the stored backup data; convert the read data from a network element data type into an application data type; and send the data converted into the application data type to the network management server; and
the network management server 11 is further configured to receive the data that is returned by the virtual network element, corresponding to the data read request, and converted into the application data type.

In a scenario, the data access request is a data storage request. The virtual network element 12 is specifically configured to: store, according to a data storage request sent by the network management server 11, to-be-stored data requested by the data storage request into the backup data of the virtual network element; and send the to-be-stored data to a network element device to which the data storage request points. The network element device 13 is configured to store the to-be-stored data requested by the data storage request.

Optionally, the virtual network element 12 is specifically configured to: store, according to a data storage request sent by the network management server 11, to-be-stored data requested by the data storage request into the virtual network element; convert the to-be-stored data from an application data type into a network element data type; and send the to-be-stored data converted into the network element data type to a network element device to which the data storage request points. The network element device 13 is configured to store the to-be-stored data converted into the application data type.

In another scenario, the data access request is a data modification request. The virtual network element 12 is specifically configured to: use, according to a data modification request sent by the network management server 11, new data requested by the data modification request to replace original data that is in the backup data and to which the data modification request points; and send the new data requested by the data modification request to a network element device that stores the original data. The network element device 13 is configured to store the original data to which the data modification request points, and use the new data sent by the virtual network element to replace the stored original data.

Optionally, the virtual network element 12 is further configured to: use, according to a data modification request sent by the network management server 11, new data requested by the data modification request to replace original data that is in the backup data and to which the data modification request points; convert the new data from an application data type into a network element data type; and send the new data converted into the network element data type to a network element device that stores the original data. The network element device 13 is configured to store the original data to which the data modification request points, and use the new data that is sent by the virtual network element and converted into the network element data type to replace the stored original data.

In still another scenario, the data access request is a deletion/modification request. The virtual network element 12 is specifically configured to: delete, according to a deletion/modification request sent by the network management server 11, data that is in the backup data and requested by the deletion/modification request; and send an instruction message to a network element device that stores the data requested by the deletion/modification request, so as to instruct to delete the data requested by the deletion/modification request. The network element device 13 may be configured to delete, according to the instruction message, the data requested by the deletion/modification request from the stored service data.

According to the network management system provided in this embodiment, a network management server, a virtual network element, and a network element device are disposed in the network management system; the virtual network element stores backup data of service data in one or more network element devices; the network management server implements access of service data in a network element device by accessing backup data that is of the service data in the network element device and stored in the virtual network element, so as to implement that the network management server accesses the service data in the network element device without relying on an interface of the network element device any longer, thereby improving access efficiency of accessing the service data by the network management server.

FIG. 2 shows a schematic architecture diagram of a network management system. Because a virtual network element 12 provides a data service for a network management server 11, the virtual network element 12 and the network management server 11 together may constitute a complete service unit in the network management system. For example, as shown in FIG. 2, the network management server 11 and the virtual network element 12 may be disposed in an integration manner, for example, disposed on one physical server node (server). Functions of the two may both be implemented on the server by using software, and operations of the two are performed by a central processing unit on the server. A network may include one or more server nodes. There may be one or n server nodes shown in FIG. 2, where n is an integer greater than one. Alternatively, the virtual network element 12 may also be an independently disposed device. Each virtual network element 12 may store backup data of multiple network element devices 13, so as to manage service data of a group of network element devices 13. Therefore, it may be implemented that different groups of network element devices 13 are mutually isolated and not interfered with each other. The virtual network element 12 may also expand, according to a service requirement, a quantity of network element devices 13 that the virtual network element 12 manages. When a client needs to access data in each network element device, the client may access a network management server 11 in a server node, and the network management server 11 further accesses a virtual network element 12 connected to the network management server 11, thereby implementing access of the data stored in the network element device.

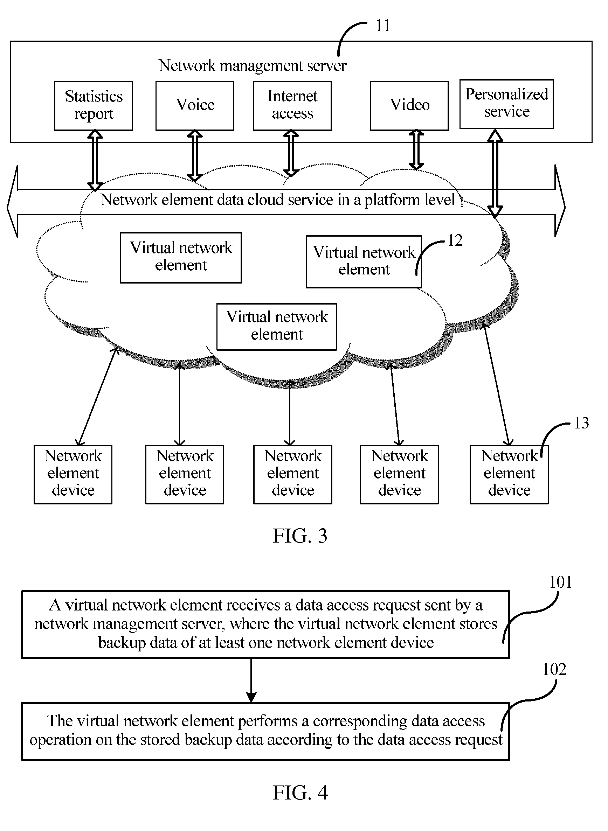

In a typical application scenario of the network management system provided in the present invention, that is, in a scenario in which the network management server 11 is deployed at a cloud server end, an access interface that is more diversified and has higher performance, a higher concurrency capability, and higher reliability is needed. As shown in FIG. 3, multiple virtual network elements 12 are disposed in the network. The network management server 11 and the virtual network elements 12 are independently disposed physical entities respectively, and each virtual network element 12 may store backup data of one or more network element devices 13. The network management server 11 needs to access service data of a statistics report, a voice service, an Internet access service, a video service, and another personalized service. A network element data service in a network element device may be separated to and implemented in a virtual network element, so as to form a service cloud of backup data of network element data. In another typical application scenario, because currently a network service develops rapidly and the service changes frequently, when a service is added or a data type is changed in a network element device, if the solution in the present invention is used, the network management server 11 does not need to perform associated upgrade to adapt to the network element device 13, and only needs to perform flexible data type conversion or add backup data of service data in the virtual network element 12, so that various types of data access requirements may be satisfied, and decoupling of the network management server 11 and the network element device 13 is implemented.

According to the network management system provided in this embodiment, a network management server, a virtual network element, and a network element device are disposed in the network management system; the virtual network element stores backup data of service data in one or more network element devices; the network management server implements access of service data in a network element device by accessing backup data that is of the service data in the network element device and stored in the virtual network element. The virtual network element and the network management server may be disposed on one physical server node, and functions of the two may be implemented by using software. Alternatively, the virtual network element and the management server may also be separately and independently disposed physical entities, so that it is implemented that the network management server accesses the service data in the network element device without relying on an interface of the network element device any longer, and the virtual network element may be flexibly disposed in different scenarios, thereby satisfying a requirement of the network management server of accessing the service data of the network element device, and improving access efficiency of accessing the service data by the network management server.

FIG. 4 is a schematic flowchart of an embodiment of a network element data access method according to an embodiment of the present invention. As shown in FIG. 4, the method includes the following steps:
Step 101: A virtual network element receives a data access request that is sent by a network management server for service data stored in a network element device, where the virtual network element stores backup data of service data stored in at least one network element device.
Step 102: The virtual network element performs a corresponding data access operation on the stored backup data of the service data according to the data access request sent by the network management server.

In a scenario, the data access request is a data read request.

The performing, by the virtual network element, a corresponding data access operation on the stored backup data according to the data access request is specifically: reading, by the virtual network element according to a data read request sent by the network management server, data requested by the data read request from the stored backup data; and sending the read data to the network management server; or
optionally, reading, by the virtual network element according to a data read request sent by the network management server, data requested by the data read request from the stored backup data; converting the read data from a network element data type into an application data type; and sending the data converted into the application data type to the network management server.

In another scenario, the data access request is a data storage request. The performing, by the virtual network element, a corresponding data access operation on the stored backup data according to the data access request is specifically: storing, by the virtual network element according to a data storage request sent by the network management server, to-be-stored data requested by the data storage request into the backup data of the virtual network element; and sending the to-be-stored data to a network element device to which the data storage request points; or
optionally, storing, by the virtual network element according to a data storage request sent by the network management server, to-be-stored data requested by the data storage request into the virtual network element; converting the to-be-stored data from an application data type into a network element data type; and sending the to-be-stored data converted into the network element data type to a network element device to which the data storage request points.

In still another scenario, the data access request is a data modification request. The performing, by the virtual network element, a corresponding data access operation on the stored backup data according to the data access request is specifically: using, by the virtual network element according to a data modification request sent by the network management server, new data requested by the data modification request to replace original data that is in the backup data and to which the data modification request points; and sending the new data requested by the data modification request to a network element device that stores the original data; or
optionally, using, by the virtual network element according to a data modification request sent by the network management server, new data requested by the data modification request to replace original data that is in the backup data and to which the data modification request points; converting the new data from an application data type into a network element data type; and sending the new data converted into the network element data type to a network element device that stores the original data.

In another scenario, the data access request is a deletion/modification request. The performing, by the virtual network element, a corresponding data access operation on the stored backup data according to the data access request is specifically: deleting, by the virtual network element according to a deletion/modification request sent by the network management server, data that is in the backup data and requested by the deletion/modification request; and sending an instruction message to a network element device that stores the data requested by the deletion/modification request, so as to instruct to delete the data requested by the deletion/modification request.

According to the network element data access processing method provided in this embodiment, a virtual network element may store backup data of service data in one or more network element devices; by accessing backup data that is of service data in a network element device and stored in the virtual network element, a network management server may implement various types of access on the service data in the network element device, including reading the data, writing the data, storing the data, modifying the data, deleting the data, and the like. Therefore, it is implemented that the network management server accesses the service data in the network element device without relying on an interface of the network element device any longer, thereby improving access efficiency of accessing the service data by the network management server. In addition, the virtual network element may further synchronize the foregoing operation to a physical network element device by interacting with the network element device, so as to implement synchronous update between the backup data in the virtual network element and data in the physical network element device.

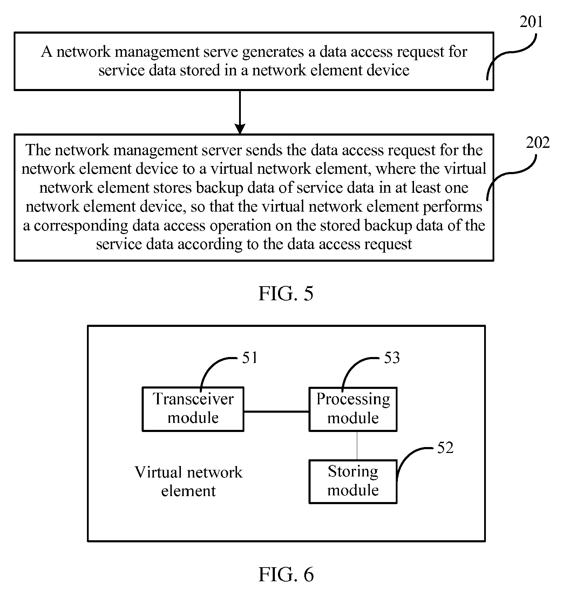

FIG. 5 is a schematic flowchart of an embodiment of a network element data access method according to an embodiment of the present invention. As shown in FIG. 5, the method includes the following steps:
Step 201: A network management server generates a data access request for service data stored in a network element device.
Step 202: The network management server sends the data access request for the network element device to a virtual network element, where the virtual network element stores backup data of service data in at least one network element device, so that the virtual network element performs a corresponding data access operation on the stored backup data of the service data according to the data access request.

Feasibly, the network management server may store a correspondence between the virtual network element and the network element device, and store identification information of one or more virtual network elements that are in a network management system.

Therefore, in step 202, the network management server may determine, according to the correspondence between the virtual network element and the network element device, a virtual network element to which the data access request points. Further, the network management server may send the data access request to the virtual network element according to identification information of the virtual network element.

Referring to related description in the embodiment shown in FIG. 4, in a scenario, the data access request may be a data read request. In this implementation scenario, the virtual network element reads, according to a data read request sent by the network management server, data requested by the data read request from the stored backup data; and sends the read data to the network management server. Therefore, after sending the data access request for the network element device to the virtual network element, the network management server may receive the data that is returned by the virtual network element and corresponding to the data read request.

Optionally, the virtual network element reads, according to a data read request sent by the network management server, data requested by the data read request from the stored backup data; converts the read data from a network element data type into an application data type; and sends data converted into the application data type to the network management server. Therefore, the network management server may further receive the data that is returned by the virtual network element, corresponding to the data read request, and converted into the application data type.

In another scenario, the data access request is a data storage request. The virtual network element stores, according to a data storage request sent by the network management server, to-be-stored data requested by the data storage request into the backup data of the virtual network element; and sends the to-be-stored data to a network element device to which the data storage request points. Alternatively, the virtual network element stores, according to a data storage request sent by the network management server, to-be-stored data requested by the data storage request into the virtual network element; converts the to-be-stored data from an application data type into a network element data type; and sends to-be-stored data converted into the network element data type to a network element device to which the data storage request points.

In still another scenario, the data access request is a data modification request. The virtual network element uses, according to a data modification request sent by the network management server, new data requested by the data modification request to replace original data that is in the backup data and to which the data modification request points; and sends the new data requested by the data modification request to a network element device that stores the original data. Alternatively, the virtual network element uses, according to a data modification request sent by the network management server, new data requested by the data modification request to replace original data that is in the backup data and to which the data modification request points; converts the new data from an application data type into a network element data type; and sends new data converted into the network element data type to a network element device that stores the original data.

In still another scenario, the data access request is a deletion/modification request. The virtual network element deletes, according to a deletion/modification request sent by the network management server, data that is in the backup data and requested by the deletion/modification request; and sends an instruction message to a network element device that stores the data requested by the deletion/modification request, so as to instruct to delete the data requested by the deletion/modification request.

According to the network element data access processing method provided in this embodiment, a network management server, a virtual network element, and a network element device are disposed in a network management system; the virtual network element stores backup data of service data in one or more network element devices; by accessing backup data that is of service data in a network element device and stored in the virtual network element, the network management server may implement various types of access on the service data in the network element device, including reading the data, writing the data, storing the data, modifying the data, deleting the data, and the like. Therefore, it is implemented that the network management server accesses the service data in the network element device without relying on an interface of the network element device any longer, thereby improving access efficiency of accessing the service data by the network management server.

FIG. 6 is a schematic structural diagram of an embodiment of a virtual network element according to the present invention. As shown in FIG. 6, the virtual network element includes:
a transceiver module 51, configured to receive a data access request that is sent by a network management server for service data stored in a network element device;
a storing module 52, configured to store backup data of service data stored in at least one network element device; and
a processing module 53, configured to perform, according to the data access request sent by the network management server, a corresponding data access operation on the backup data that is of the service data and stored in the storing module.

In a scenario, the data access request is a data read request. In terms of the performing a corresponding data access operation on the stored backup data of the service data according to the data access request sent by the network management server, the processing module 51 is specifically configured to read, according to a data read request sent by the network management server, data requested by the data read request from the stored backup data. The transceiver module 53 is further configured to send the read data to the network management server.

Optionally, in terms of the performing a corresponding data access operation on the stored backup data of the service data according to the data access request sent by the network management server, the processing module 53 may be specifically configured to: read, according to a data read request sent by the network management server, data requested by the data read request from the backup data stored in the storing module 52; and convert the read data from a network element data type into an application data type. The transceiver module 51 is further configured to send the data converted into the application data type to the network management server.

In another scenario, the data access request is a data storage request. In terms of the performing a corresponding data access operation on the stored backup data of the service data according to the data access request sent by the network management server, the processing module 53 is specifically configured to store, according to a data storage request sent by the network management server, to-be-stored data requested by the data storage request into the storing module. The transceiver module 51 is further configured to send the to-be-stored data to a network element device to which the data storage request points.

Optionally, in terms of the performing a corresponding data access operation on the stored backup data of the service data according to the data access request sent by the network management server, the processing module 53 is specifically configured to: store, according to a data storage request sent by the network management server, to-be-stored data requested by the data storage request into the storing module; and convert the to-be-stored data from an application data type into a network element data type. The transceiver module 51 is further configured to send the to-be-stored data converted into the network element data type to a network element device to which the data storage request points.

In still another scenario, the data access request is a data modification request. In terms of the performing a corresponding data access operation on the stored backup data of the service data according to the data access request sent by the network management server, the processing module 53 is specifically configured to use, according to a data modification request sent by the network management server, new data requested by the data modification request to replace original data that is in the backup data and to which the data modification request points. The transceiver module 51 is further configured to send the new data requested by the data modification request to a network element device that stores the original data.

Optionally, in terms of the performing a corresponding data access operation on the stored backup data of the service data according to the data access request sent by the network management server, the processing module 53 is specifically configured to: use, according to a data modification request sent by the network management server, new data requested by the data modification request to replace original data that is in the backup data and to which the data modification request points; and convert the new data from an application data type into a network element data type. The transceiver module 51 is further configured to send the new data converted into the network element data type to a network element device that stores the original data.

In another scenario, the data access request is a deletion/modification request. In terms of the performing a corresponding data access operation on the stored backup data of the service data according to the data access request sent by the network management server, the processing module 53 is specifically configured to: delete, according to a deletion/modification request sent by the network management server, data that is in the backup data and requested by the deletion/modification request; and send an instruction message to a network element device that stores the data requested by the deletion/modification request, so as to instruct to delete the data requested by the deletion/modification request.

For both a detailed process and effect of network element data access performed by the virtual network element provided in this embodiment, reference may be made to related description in FIG. 1 to FIG. 4.

The virtual network element provided in this embodiment may store backup data of service data in one or more network element devices; by accessing backup data that is of service data in a network element device and stored in the virtual network element, a network management server may implement various types of access on the service data in the network element device, including reading the data, writing the data, storing the data, modifying the data, deleting the data, and the like. Therefore, it is implemented that the network management server accesses the service data in the network element device without relying on an interface of the network element device any longer, thereby improving access efficiency of accessing the service data by the network management server. In addition, the virtual network element may further synchronize the foregoing operation to a physical network element device by interacting with the network element device, so as to implement synchronous update between the backup data in the virtual network element and data in the physical network element device.

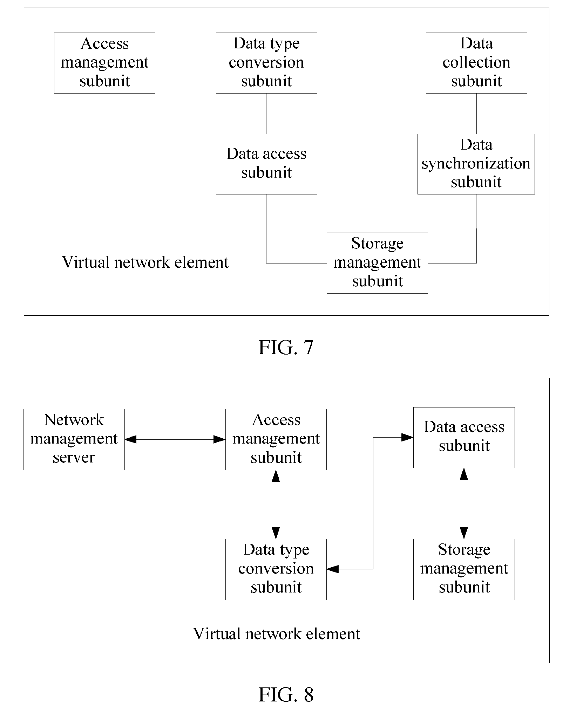

As shown in FIG. 7, specific functions of various modules in the foregoing virtual network element are described below in detail and include the following aspects:

The processing module 53 includes an access management subunit, where the access management subunit has a function of performing access management on an access request of a network management server. Specifically, the transceiver module 51 may provide an access interface for the network management server, and the access management subunit may perform information encapsulation on an access request that is from the network management server and received by the transceiver module 51, so as to convert an external request into an internal request; on the other hand, after obtaining return information of the access request, the access management subunit may encapsulate and then send the information to the network management server by using the transceiver module 51.

The processing module 53 further includes a data type conversion subunit, where the data type conversion subunit has a data type conversion function, and specifically, may perform conversion between a network element data type and an application data type. A data type that the network management server can identify is the application data type, and a data type that a network element device can identify is the network element data type. Therefore, for data in various types of access requests mentioned above that are from the network management server and are received by the transceiver module 51, the data type conversion subunit may convert the data from the application data type into the network element data type; store converted data into the local storing module 52, so as to keep consistency between a data type of the virtual network element and a service data type of the network element device; and may further send the converted data to the network element device, so that the network element device can directly identify the converted data and then perform a corresponding operation. However, for data that needs to be returned to the network management server from backup data in the local storing module 52 of the virtual network element, for example, data that needs to be returned for a data read request, the data type conversion subunit may convert the data from the application data type into the network element data type, and send converted data to the network management server by using the transceiver module 51.

The processing module 53 further includes a data access subunit. Specifically, the data access subunit may perform, according to an access request from the network management server, an operation such as storing, reading, modifying, or deleting on the backup data in the storing module 52 of the virtual network element and service data in the network element device, and report an operation result to the network management server.

The processing module 53 further includes a data collection subunit, which may collect original service data from the network element device and use the collected original service data as a data source, that is, backup data, of a virtual network element service.

The processing module 53 further includes a synchronization subunit, which may process the collected original service data.

The processing module 53 further includes a storage management subunit, which may perform persistent storage and management on the backup data stored in the storing module 52.

As shown in FIG. 8, a scenario in which the access request is a data read request is described with reference to the foregoing subunit functions of the virtual network element.

The network management server initiates a data read request, after the access management subunit receives the request by using the transceiver module 51 and read data from the backup data stored in the storing module 52, the data type conversion subunit converts the read data from the network element data type into the application data type, and the access management subunit returns data converted into the application data type to the network management server by using the transceiver module 51.

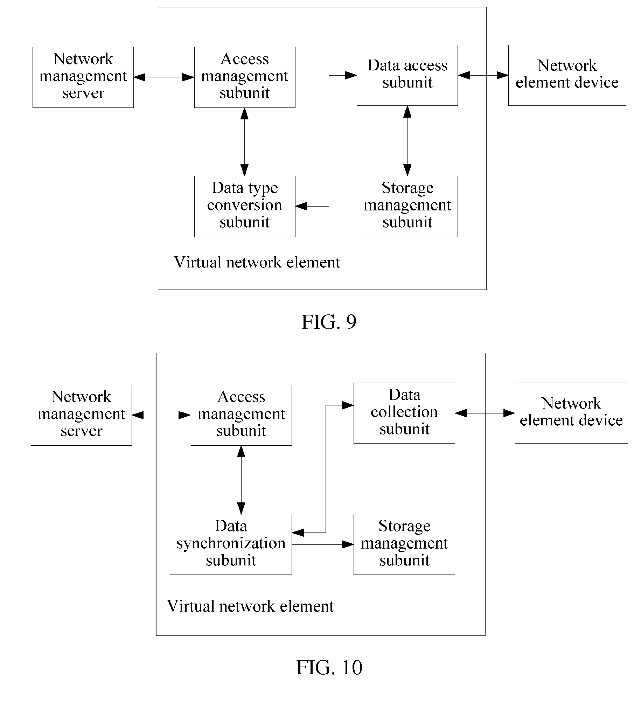

As shown in FIG. 9, a scenario in which the access request is a data storage request is described with reference to the foregoing subunit functions of the virtual network element.

The network management server initiates a data storage request, and the data type conversion subunit converts data requested to be stored from the application data type into the network element data type and then stores data converted into the network element data type into the local storing module 52; then, the data access subunit further sends the converted data to the network element device to be stored correspondingly.

As shown in FIG. 10, description is made with reference to a data synchronization operation between a subunit of the foregoing virtual network element and the network element device. After the network element device collects data, the data synchronization subunit synchronously collects the data from the network element device, and stores the collected data into the storing module 52, thereby implementing that the collected data is synchronously updated to the virtual network element.

In the embodiments shown in FIG. 7 to FIG. 10, a processing module in the virtual network element further includes an access management subunit to implement an access management function for a transceiver module, so as to implement encapsulation and decapsulation operations on an access request from a network management server, thereby implementing conversion between an internal request and an external request. A data type conversion subunit implements mutual conversion between an application data type that the network management server can identify and a network element data type that a network element device can identify. Therefore, by means of the foregoing conversion, the network management server can identify received data or message, and the network element device can also identify received data or message. A data access subunit can adapt to an access type of the network management server to perform an operation such as storing, reading, modifying, or deleting on backup data stored in the virtual network element. A data collection unit implements collection of original service data from the network element device, and implements synchronous update between the backup data stored in the virtual network element and data in a physical network element device by using a synchronization subunit. A storage management subunit can implement persistent storage and management on backup data locally stored in the virtual network element.

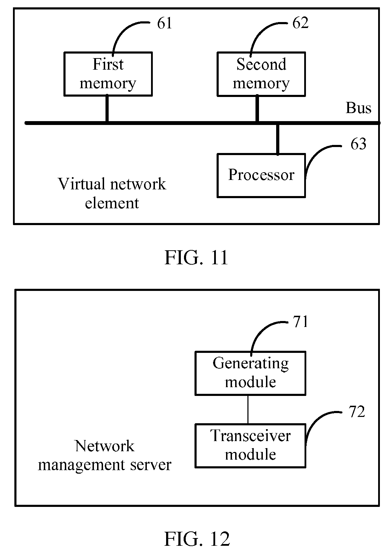

FIG. 11 is a schematic structural diagram of an embodiment of a virtual network element according to the present invention. As shown in FIG. 11, the virtual network element includes: a first memory 61, configured to store an instruction; a second memory 62, configured to store backup data of service data stored in at least one network element device.

A processor 62 separately communicates with the first memory 61 and the second memory 62 and is configured to run the instruction stored in the first memory 61 to execute the following method: receiving a data access request that is sent by a network management server for service data stored in a network element device, and performing, according to the data access request sent by the network management server, a corresponding data access operation on backup data that is of the service data and stored in a storing module.

In a scenario, the data access request is a data read request. In terms of the performing a corresponding data access operation on the stored backup data of the service data according to the data access request sent by the network management server, the processor 62 is specifically configured to: read, according to a data read request sent by the network management server, data requested by the data read request from the stored backup data; and send the read data to the network management server.

Optionally, in terms of the performing a corresponding data access operation on the stored backup data of the service data according to the data access request sent by the network management server, the processor 62 may be specifically configured to: read, according to a data read request sent by the network management server, data requested by the data read request from the stored backup data; convert the read data from a network element data type into an application data type; and send the data converted into the application data type to the network management server.

In another scenario, the data access request is a data storage request. In terms of the performing a corresponding data access operation on the stored backup data of the service data according to the data access request sent by the network management server, the processor 62 is specifically configured to: store, according to a data storage request sent by the network management server, to-be-stored data requested by the data storage request into the storing module; and send the to-be-stored data to a network element device to which the data storage request points.

Optionally, in terms of the performing a corresponding data access operation on the stored backup data of the service data according to the data access request sent by the network management server, the processor 62 is specifically configured to: store, according to a data storage request sent by the network management server, to-be-stored data requested by the data storage request into the memory 62; convert the to-be-stored data from an application data type into a network element data type; and send the to-be-stored data converted into the network element data type to a network element device to which the data storage request points.

In still another scenario, the data access request is a data modification request. In terms of the performing a corresponding data access operation on the stored backup data of the service data according to the data access request sent by the network management server, the processor 62 is specifically configured to: use, according to a data modification request sent by the network management server, new data requested by the data modification request to replace original data that is in the backup data and to which the data modification request points; and send the new data requested by the data modification request to a network element device that stores the original data.

Optionally, in terms of the performing a corresponding data access operation on the stored backup data of the service data according to the data access request sent by the network management server, the processor 62 is specifically configured to: use, according to a data modification request sent by the network management server, new data requested by the data modification request to replace original data that is in the backup data and to which the data modification request points; convert the new data from an application data type into a network element data type; and send the new data converted into the network element data type to a network element device that stores the original data.

In another scenario, the data access request is a deletion/modification request. In terms of the performing a corresponding data access operation on the stored backup data of the service data according to the data access request sent by the network management server, the processor 62 is specifically configured to: delete, according to a data storage request sent by the network management server, data that is in the backup data and requested by the deletion/modification request; and send an instruction message to a network element device that stores the data requested by the deletion/modification request, so as to instruct to delete the data requested by the deletion/modification request.

Specifically, referring to FIG. 6 to FIG. 9, the processor 62 in this embodiment also has functions of the access management subunit, the data type conversion subunit, the data access subunit, the data collection subunit, the synchronization subunit, and the storage management subunit that are in FIG. 6 to FIG. 9. For a corresponding operation performed by the processor 62, reference may be made to related description in the foregoing embodiments of FIG. 6 to FIG. 9, and details are not described herein again.

For both a detailed process and effect of network element data access performed by the virtual network element provided in this embodiment, reference may be made to related description in FIG. 1 to FIG. 3, and details are not described herein again.

The virtual network element provided in this embodiment may store backup data of service data in one or more network element devices; by accessing backup data that is of service data in a network element device and stored in the virtual network element, a network management server may implement various types of access on the service data in the network element device, including reading the data, writing the data, storing the data, modifying the data, deleting the data, and the like. Therefore, it is implemented that the network management server accesses the service data in the network element device without relying on an interface of the network element device any longer, thereby improving access efficiency of accessing the service data by the network management server. In addition, the virtual network element may further synchronize the foregoing operation to a physical network element device by interacting with the network element device, so as to implement synchronous update between the backup data in the virtual network element and data in the physical network element device.

Further, a processor in the virtual network element further has an access management function, so as to implement encapsulation and decapsulation operations on an access request from the network management server, thereby implementing conversion between an internal request and an external request. Further, mutual conversion between an application data type that the network management server can identify and a network element data type that the network element device can identify can be implemented. Therefore, by means of the foregoing conversion, the network management server can identify received data or message, and the network element device can also identify received data or message. The processor can further adapt to an access type of the network management server to perform an operation such as storing, reading, modifying, or deleting on the backup data stored in the virtual network element. The processor further implements collection of original service data from the network element device, and synchronous update between the backup data stored in the virtual network element and data in the physical network element device is further implemented by using the processor. The processor can further implement persistent storage and management on backup data locally stored in the virtual network element.

FIG. 12 is a schematic structural diagram of an embodiment of a network management server according to the present invention. As shown in FIG. 12, the network management server includes:
a generating module 71, configured to generate a data access request for service data stored in a network element device; and
a transceiver module 72, configured to send the data access request for the network element device to a virtual network element, where the virtual network element stores backup data of service data in at least one network element device, so that the virtual network element performs a corresponding data access operation on the stored backup data of the service data according to the data access request.

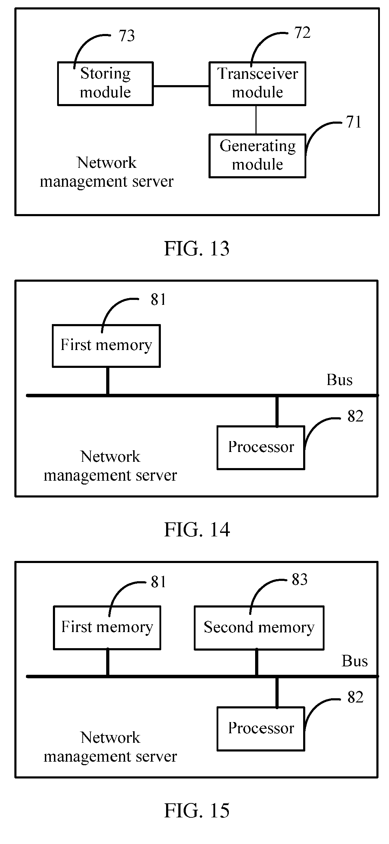

Further, as shown in FIG. 13, the network management server may further include:
a storing module 73, configured to store a correspondence between the virtual network element and the network element device, and store identification information of one or more virtual network elements that are in a network management system.

In terms of the sending the data access request for the network element device to a virtual network element, the transceiver module 72 may be specifically configured to: determine, according to the correspondence between the virtual network element and the network element device stored in the storing module, a virtual network element to which the data access request points; and send the data access request to the virtual network element according to identification information that is of the virtual network element and stored in the storing module.

Optionally, the data access request is a data read request.

After sending the data access request for the network element device to the virtual network element, the transceiver module 72 may be further configured to receive the data that is returned by the virtual network element and corresponding to the data read request, or receive the data that is returned by the virtual network element, corresponding to the data read request, and converted into an application data type.

Optionally, the data access request is a data storage request, or the data access request is a data modification request, or the data access request is a deletion/modification request.

For both a detailed process and effect of network element data access performed by the network management server provided in this embodiment, reference may be made to related description in FIG. 1 to FIG. 3, and details are not described herein again.

By accessing backup data that is of service data in a network element device and stored in a virtual network element, the network management server provided in this embodiment may implement various types of access on the service data in the network element device, including reading the data, writing the data, storing the data, modifying the data, deleting the data, and the like. Therefore, it is implemented that the network management server accesses the service data in the network element device without relying on an interface of the network element device any longer, thereby improving access efficiency of accessing the service data by the network management server.

FIG. 14 is a schematic structural diagram of an embodiment of a network management server according to the present invention. As shown in FIG. 14, the network management server includes: a first memory 81, configured to store an instruction; and a processor 82 communicating with the first memory 81, configured to run the instruction stored in the first memory 81 to execute the following method:
generating a data access request for service data stored in a network element device; and
sending the data access request for the network element device to a virtual network element, where the virtual network element stores backup data of service data in at least one network element device, so that the virtual network element performs a corresponding data access operation on the stored backup data of the service data according to the data access request.

Further, as shown in FIG. 15, the network management server may further include: a second memory 83, configured to store a correspondence between the virtual network element and the network element device, and store identification information of one or more virtual network elements that are in a network management system.

In terms of the sending the data access request for the network element device to a virtual network element, the processor 82 may be specifically configured to: determine, according to the correspondence between the virtual network element and the network element device stored in a storing module, a virtual network element to which the data access request points; and send the data access request to the virtual network element according to identification information that is of the virtual network element and stored in the storing module.

Optionally, the data access request is a data read request.

After sending the data access request for the network element device to the virtual network element, the processor 82 may be further configured to receive the data that is returned by the virtual network element and corresponding to the data read request, or receive the data that is returned by the virtual network element, corresponding to the data read request, and converted into an application data type.

Optionally, the data access request is a data storage request, or the data access request is a data modification request, or the data access request is a deletion/modification request.

For both a detailed process and effect of network element data access performed by the network management server provided in this embodiment, reference may be made to related description in FIG. 1 to FIG. 3, and details are not described herein again.

By accessing backup data that is of service data in a network element device and stored in a virtual network element, the network management server provided in this embodiment may implement various types of access on the service data in the network element device, including reading the data, writing the data, storing the data, modifying the data, deleting the data, and the like. Therefore, it is implemented that the network management server accesses the service data in the network element device without relying on an interface of the network element device any longer, thereby improving access efficiency of accessing the service data by the network management server.

Persons of ordinary skill in the art may understand that all or some of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A network management system, comprising: a network management server, a virtual network element, and a network element device, wherein:
the network element device is configured to store service data;
the network management server is configured to send a data access request for the service data stored in the network element device to the virtual network element; and
the virtual network element is configured to store backup data of the service data in at least one network element device, and perform a corresponding data access operation on the stored backup data of the service data according to the data access request sent by the network management server.

2. The network management system according to claim 1, wherein the network management server is further configured to: store a correspondence between the virtual network element and the network element device, and store identification information of one or more virtual network elements that are in the network management system; and
in terms of the sending a data access request for the service data stored in the network element device to the virtual network element, the network management server is specifically configured to: determine, according to the correspondence between the virtual network element and the network element device, a virtual network element to which the data access request points; and send the data access request to the virtual network element according to identification information of the virtual network element.

3. The network management system according to claim 1 or 2, wherein the data access request is a data read request;
in terms of the performing a corresponding data access operation on the stored backup data of the service data according to the data access request sent by the network management server, the virtual network element is specifically configured to: read, according to a data read request sent by the network management server, data requested by the data read request from the stored backup data; and send the read data to the network management server; and
the network management server is further configured to receive the data that is returned by the virtual network element and corresponding to the data read request.

4. The network management system according to claim 1 or 2, wherein the data access request is a data read request;
in terms of the performing a corresponding data access operation on the stored backup data of the service data according to the data access request sent by the network management server, the virtual network element is specifically configured to: read, according to a data read request sent by the network management server, data requested by the data read request from the stored backup data; convert the read data from a network element data type into an application data type; and send the data converted into the application data type to the network management server; and
the network management server is further configured to receive the data that is returned by the virtual network element, corresponding to the data read request, and converted into the application data type.

5. The network management system according to claim 1 or 2, wherein the data access request is a data storage request;
in terms of the performing a corresponding data access operation on the stored backup data of the service data according to the data access request sent by the network management server, the virtual network element is specifically configured to: store, according to a data storage request sent by the network management server, to-be-stored data requested by the data storage request into the backup data of the virtual network element; and send the to-be-stored data to a network element device to which the data storage request points; and
the network element device is specifically configured to store the to-be-stored data requested by the data storage request.

6. The network management system according to claim 1 or 2, wherein the data access request is a data storage request;
in terms of the performing a corresponding data access operation on the stored backup data of the service data according to the data access request sent by the network management server, the virtual network element is specifically configured to: store, according to a data storage request sent by the network management server, to-be-stored data requested by the data storage request into the virtual network element; convert the to-be-stored data from an application data type into a network element data type; and send the to-be-stored data converted into the network element data type to a network element device to which the data storage request points; and
the network element device is specifically configured to store the to-be-stored data converted into the application data type.

7. The network management system according to claim 1 or 2, wherein the data access request is a data modification request;
in terms of the performing a corresponding data access operation on the stored backup data of the service data according to the data access request sent by the network management server, the virtual network element is specifically configured to: use, according to a data modification request sent by the network management server, new data requested by the data modification request to replace original data that is in the backup data and to which the data modification request points; and send the new data requested by the data modification request to a network element device that stores the original data; and
the network element device is specifically configured to store the original data to which the data modification request points, and use the new data sent by the virtual network element to replace the stored original data.

8. The network management system according to claim 1 or 2, wherein the data access request is a data modification request;
in terms of the performing a corresponding data access operation on the stored backup data of the service data according to the data access request sent by the network management server, the virtual network element is further configured to: use, according to a data modification request sent by the network management server, new data requested by the data modification request to replace original data that is in the backup data and to which the data modification request points; convert the new data from an application data type into a network element data type; and send the new data converted into the network element data type to a network element device that stores the original data; and
the network element device is specifically configured to store the original data to which the data modification request points, and use the new data that is sent by the virtual network element and converted into the network element data type to replace the stored original data.

9. The network management system according to claim 1 or 2, wherein the data access request is a deletion/modification request;
in terms of the performing a corresponding data access operation on the stored backup data of the service data according to the data access request sent by the network management server, the virtual network element is specifically configured to: delete, according to a deletion/modification request sent by the network management server, data that is in the backup data and requested by the deletion/modification request; and send an instruction message to a network element device that stores the data requested by the deletion/modification request, so as to instruct to delete the data requested by the deletion/modification request; and
the network element device is further configured to delete, according to the instruction message, the data requested by the deletion/modification request from the stored service data.

10. The network management system according to any one of claims 1 to 9, wherein an interface between the network management server and the virtual network element uses a proprietary protocol; an interface between the virtual network element and the network element device uses the File Transfer Protocol, the Simple Network Management Protocol, or the Telecommunication Network Protocol.

11. A network element data access method, comprising:
receiving, by a virtual network element, a data access request that is sent by a network management server for service data stored in a network element device, wherein the virtual network element stores backup data of service data stored in at least one network element device; and
performing, by the virtual network element, a corresponding data access operation on the stored backup data of the service data according to the data access request sent by the network management server.

12. The method according to claim 11, wherein the data access request is a data read request; and
the performing, by the virtual network element, a corresponding data access operation on the stored backup data according to the data access request comprises:
reading, by the virtual network element according to a data read request sent by the network management server, data requested by the data read request from the stored backup data; and sending the read data to the network management server.

13. The method according to claim 11, wherein the data access request is a data read request; and
the performing, by the virtual network element, a corresponding data access operation on the stored backup data according to the data access request comprises:
reading, by the virtual network element according to a data read request sent by the network management server, data requested by the data read request from the stored backup data; converting the read data from a network element data type into an application data type; and sending the data converted into the application data type to the network management server.

14. The method according to claim 11, wherein the data access request is a data storage request; and
the performing, by the virtual network element, a corresponding data access operation on the stored backup data according to the data access request comprises:
storing, by the virtual network element according to a data storage request sent by the network management server, to-be-stored data requested by the data storage request into the backup data of the virtual network element; and sending the to-be-stored data to a network element device to which the data storage request points.

15. The method according to claim 11, wherein the data access request is a data storage request; and
the performing, by the virtual network element, a corresponding data access operation on the stored backup data according to the data access request comprises:
storing, by the virtual network element according to a data storage request sent by the network management server, to-be-stored data requested by the data storage request into the virtual network element; converting the to-be-stored data from an application data type into a network element data type; and sending the to-be-stored data converted into the network element data type to a network element device to which the data storage request points.

16. The method according to claim 11, wherein the data access request is a data modification request; and
the performing, by the virtual network element, a corresponding data access operation on the stored backup data according to the data access request comprises:
using, by the virtual network element according to a data modification request sent by the network management server, new data requested by the data modification request to replace original data that is in the backup data and to which the data modification request points; and sending the new data requested by the data modification request to a network element device that stores the original data.

17. The method according to claim 11, wherein the data access request is a data modification request; and
the performing, by the virtual network element, a corresponding data access operation on the stored backup data according to the data access request comprises:
using, by the virtual network element according to a data modification request sent by the network management server, new data requested by the data modification request to replace original data that is in the backup data and to which the data modification request points; converting the new data from an application data type into a network element data type; and sending the new data converted into the network element data type to a network element device that stores the original data.

18. The method according to claim 11, wherein the data access request is a deletion/modification request; and
the performing, by the virtual network element, a corresponding data access operation on the stored backup data according to the data access request comprises:
deleting, by the virtual network element according to a deletion/modification request sent by the network management server, data that is in the backup data and requested by the deletion/modification request; and sending an instruction message to a network element device that stores the data requested by the deletion/modification request, so as to instruct to delete the data requested by the deletion/modification request.

19. A network element data access method, comprising:
generating, by a network management server, a data access request for service data stored in a network element device; and
sending, by the network management server, the data access request for the network element device to a virtual network element, wherein the virtual network element stores backup data of the service data in at least one network element device, so that the virtual network element performs a corresponding data access operation on the stored backup data of the service data according to the data access request.

20. The method according to claim 19, wherein the network management server stores a correspondence between the virtual network element and the network element device, and stores identification information of one or more virtual network elements that are in the network management system; and
the sending, by the network management server, the data access request for the network element device to a virtual network element comprises:
determining, by the network management server according to the correspondence between the virtual network element and the network element device, a virtual network element to which the data access request points; and
sending, by the network management server, the data access request to the virtual network element according to identification information of the virtual network element.

21. The method according to claim 19 or 20, wherein the data access request is a data read request; and
after the sending, by the network management server, the data access request for the network element device to a virtual network element, the method further comprises:
receiving, by the network management server, data that is returned by the virtual network element and corresponding to the data read request; or
receiving, by the network management server, data that is returned by the virtual network element, corresponding to the data read request, and converted into an application data type.

22. The method according to claim 19 or 20, wherein the data access request is a data storage request, or the data access request is a data modification request, or the data access request is a deletion/modification request.

23. A virtual network element, comprising:
a transceiver module, configured to receive a data access request that is sent by a network management server for service data stored in a network element device;
a storing module, configured to store backup data of service data stored in at least one network element device; and
a processing module, configured to perform, according to the data access request sent by the network management server, a corresponding data access operation on the backup data that is of the service data and stored in the storing module.

24. The virtual network element according to claim 23, wherein the data access request is a data read request;
in terms of the performing a corresponding data access operation on the stored backup data of the service data according to the data access request sent by the network management server, the processing module is specifically configured to read, according to a data read request sent by the network management server, data requested by the data read request from the stored backup data; and
the transceiver module is further configured to send the read data to the network management server.

25. The virtual network element according to claim 23, wherein the data access request is a data read request;
in terms of the performing a corresponding data access operation on the stored backup data of the service data according to the data access request sent by the network management server, the processing module is specifically configured to: read, according to a data read request sent by the network management server, data requested by the data read request from the backup data stored in the storing module; and convert the read data from a network element data type into an application data type; and
the transceiver module is further configured to send the data converted into the application data type to the network management server.

26. The virtual network element according to claim 23, wherein the data access request is a data storage request;
in terms of the performing a corresponding data access operation on the stored backup data of the service data according to the data access request sent by the network management server, the processing module is specifically configured to store, according to a data storage request sent by the network management server, to-be-stored data requested by the data storage request into the storing module; and
the transceiver module is further configured to send the to-be-stored data to a network element device to which the data storage request points.

27. The virtual network element according to claim 23, wherein the data access request is a data storage request;
in terms of the performing a corresponding data access operation on the stored backup data of the service data according to the data access request sent by the network management server, the processing module is specifically configured to: store, according to a data storage request sent by the network management server, to-be-stored data requested by the data storage request into the storing module; and convert the to-be-stored data from an application data type into a network element data type; and
the transceiver module is further configured to send the to-be-stored data converted into the network element data type to a network element device to which the data storage request points.

28. The virtual network element according to claim 23, wherein the data access request is a data modification request;
in terms of the performing a corresponding data access operation on the stored backup data of the service data according to the data access request sent by the network management server, the processing module is specifically configured to use, according to a data modification request sent by the network management server, new data requested by the data modification request to replace original data that is in the backup data and to which the data modification request points; and
the transceiver module is further configured to send the new data requested by the data modification request to a network element device that stores the original data.

29. The virtual network element according to claim 23, wherein the data access request is a data modification request;
in terms of the performing a corresponding data access operation on the stored backup data of the service data according to the data access request sent by the network management server, the processing module is specifically configured to: use, according to a data modification request sent by the network management server, new data requested by the data modification request to replace original data that is in the backup data and to which the data modification request points; and convert the new data from an application data type into a network element data type; and
the transceiver module is further configured to send the new data converted into the network element data type to a network element device that stores the original data.

30. The virtual network element according to claim 23, wherein the data access request is a deletion/modification request;
in terms of the performing a corresponding data access operation on the stored backup data of the service data according to the data access request sent by the network management server, the processing module is specifically configured to: delete, according to a deletion/modification request sent by the network management server, data that is in the backup data and requested by the deletion/modification request; and send an instruction message to a network element device that stores the data requested by the deletion/modification request, so as to instruct to delete the data requested by the deletion/modification request.

31. A network management server, comprising:
a generating module, configured to generate a data access request for service data stored in a network element device; and
a transceiver module, configured to send the data access request for the network element device to a virtual network element, wherein the virtual network element stores backup data of the service data in at least one network element device, so that the virtual network element performs a corresponding data access operation on the stored backup data of the service data according to the data access request.

32. The network management server according to claim 31, further comprising:
a storing module, configured to store a correspondence between the virtual network element and the network element device, and store identification information of one or more virtual network elements that are in the network management system; and
in terms of the sending the data access request for the network element device to a virtual network element, the transceiver module is specifically configured to:
determine, according to the correspondence between the virtual network element and the network element device stored in the storing module, a virtual network element to which the data access request points; and send the data access request to the virtual network element according to identification information that is of the virtual network element and stored in the storing module.

33. The network management server according to claim 31 or 32, wherein the data access request is a data read request; and
after sending the data access request for the network element device to the virtual network element, the transceiver module is further configured to receive the data that is returned by the virtual network element and corresponding to the data read request, or receive the data that is returned by the virtual network element, corresponding to the data read request, and converted into an application data type.

34. The network management server according to claim 31 or 32, wherein the data access request is a data storage request, or the data access request is a data modification request, or the data access request is a deletion/modification request.
